**Europäisches Patentamt**

**European Patent Office**

**Office européen des brevets**

(19)

(11) Veröffentlichungsnummer: **0 059 199**
**B1**

(12) # EUROPÄISCHE PATENTSCHRIFT

(45) Veröffentlichungstag der Patentschrift:
04.12.85

(51) Int. Cl.⁴: **G 05 B 19/42**

(21) Anmeldenummer: 81902392.0

(22) Anmeldetag: 25.08.81

(86) Internationale Anmeldenummer:
**PCT/CH 81/00096**

(87) Internationale Veröffentlichungsnummer:
**WO 82/00906 (18.03.82 Gazette 82/8)**

(54) VERFAHREN UND VORRICHTUNG FÜR DAS FORMEN DER OBERFLÄCHE EINES WERKSTÜCKS.

(30) Priorität: 05.09.80 CH 6696/80

(43) Veröffentlichungstag der Anmeldung:
08.09.82 Patentblatt 82/36

(45) Bekanntmachung des Hinweises auf die Patenterteilung:
04.12.85 Patentblatt 85/49

(84) Benannte Vertragsstaaten:
FR

(56) Entgegenhaltungen:
DE - A - 2 649 123
FR - A - 2 081 889
FR - A - 2 311 630
FR - A - 2 365 838
GB - A - 2 008 287
US - A - 3 449 742

A.F.I.P.S. Joint Computer Conference, Band 44, 1975, (Montvale, US), H. Merryweather "Two application programs which link design and manufacture", Seiten 805-811
Engineering, Band 220, Nr. 3, veröffentlicht in März 1980 (London, GB), "Profile machining in the n.c. era", Seiten 284-286
Proceedings of Numerical Control Society, 16. Annual Meeting, 25-28, März 1979, (Springlake, US), D.C. Beran

(73) Patentinhaber: HOSSDORF, Heinz, Tellplatz 12, CH-4002 Basel (CH)

(72) Erfinder: HOSSDORF, Heinz, Tellplatz 12, CH-4002 Basel (CH)

(74) Vertreter: Meyer, Reinhard, Dipl.-Ing., c/o Dr. A. R. Egli & Co. Patentanwälte Horneggstrasse 4, CH-8008 Zürich (CH)

(56) Entgegenhaltungen: (Fortsetzung)
"Numerical control programming via computer graphics", Seiten 56-71
Engineers Digest, Band 30, Nr. 12, veröffentlicht in Dezember 1969, (London, GB), J.R. Crookall "Numerically controlled machine tools", Teil 8, Seiten 91-112

**Beschreibung**

Die Erfindung betrifft ein Verfahren für das Formen der Oberfläche eines Werkstücks durch spanende Bearbeitung oder plastische Umformung des Werkstücks durch ein computerunterstütztes Werkzeug, wobei die zu formende Oberfläche als ein dreidimensionales Modell in dem Computer gespeichert wird und eine Ist-Lage des Werkzeugs und/oder das Erreichen einer Soll-Lage während dem Bearbeiten oder Formen ständig bestimmt und mit der Oberfläche des gespeicherten Modells verglichen wird, und eine Vorrichtung zur Durchführung des Verfahrens.

In vielen Bereichen der Technik wird in der einen oder anderen Phase des Entwurfs- oder Fertigungsprozesses die Herstellung eines materiellen Modelles des geplanten Gegenstandes notwendig, beispielsweise als Ausgangspunkt weiterer Untersuchungen oder als Schablone in Kopiermaschinen, insbesondere Kopierfräsmaschinen. Dies gilt insbesondere in Fällen, wo die geometrische Form komplex und nicht analytisch beschreibbar ist. Man denke hier beispielsweise an den Karosseriebau, Schiffs- und Flugzeugbau, an freigeformte Gußstücke, Gehäuse, Gebinde u. ä. oder auch an die modellhafte Darstellung von Naturobjekten, z. B. Geländemodellen oder Kunstgegenständen. Diese Modelle werden meistens handwerklich gefestigt. Der zeitliche Aufwand zu ihrer Herstellung kann deshalb je nach der Kompliziertheit des Modells erheblich sein. Nachteilig ist auch, daß nachträgliche Änderungen, die sich aus verschiedenen Gründen aufdrängen könnnen, nur schwer am bereits bestehenden Modell berücksichtigt werden können.

Seit es neuerdings möglich ist, räumliche Modelle beliebiger Gestalt abstrakt im Computer zu beschreiben und zu speichern und jederzeit beliebige Aspekte dieses Modelles, z. B. projektive Ansichten, Schnitte, optisch am Bildschirm zu betrachten, kann der Computer zumindest teilweise die bisherigen Funktionen des materiellen Modelles übernehmen. Insbesondere können während der Entwurfsphase Modifikationen am Computermodell mit weit geringerem Aufwand vorgenommen und deren Auswirkungen sofort visuell beurteilt werden. Dennoch kann auf die schlußendliche Herstellung eines materiellen Modelles, in vielen Fällen nicht verzichtet werden, wenn das Modell beispielsweise als Gießmodell oder als Kopierschablone verwendet werden soll oder wenn seine sonstigen Eigenschaften von Interesse sind.

So zeigt beispielsweise die FR-A-2 365 838 eine pantographische Einrichtung. Dabei wird das Modell mit Hilfe von Tastern und Fotozellen abgegriffen und einem Speicher eingegeben. Die Übertragung des so gespeicherten Modells erfolgt dann über einen von mehreren Motoren angetriebenen Pantographen.

Die Verwendung einer Modellesevorrichtung und Signalgebern erlaubt, dem Profil des Modells manuell zu folgen und dieses Profil in einem Computerspeicher zu speichern. Das Werkzeug selbst wird automatisch gesteuert.

Nach der GB-A-2 008 287 wird die Bewegung eines Gelenkarmes ebenfalls von einem Prozessor gesteuert. Einem programmierbaren Speicher werden die räumlichen Randabmessungen eines Arbeitsbereichs am Ende des Gelenkarmes eingegeben. Innerhalb dieser Abmessungen wird der Arm frei bewegt, wenn er aber den Rand des Arbeitsbereiches erreicht, wird ein Alarmsignal abgegeben. Dort handelt es sich jedoch ausschließlich um die Positionierung eines Pipelineanschlusses auf Tankschiffen.

Bekannt sind auch Verfahren zur Herstellung freigeformter Werkstücke über numerisch gesteuerte Werkzeugmaschinen. Das Werkstück wird zunächst als Rohling bereitgestellt; die Bearbeitung erfolgt durch Werkzeuge, welche durch Steuerimpulse geführt werden, welche entweder laufend nach einem vorgegebenen Gesetz errechnet oder auf einem Datenträger (z. B. Lochstreifen, Magnetband) gespeichert sind. Wesentlich ist bei diesem Verfahren, daß jede einzelne vom Werkzeug beschriebene Bahn numerisch vorbestimmt sein muß.

Hier setzt die Erfindung ein, deren Aufgabe es ist, ein Verfahren der eingangs beschriebenen Art so auszugestalten, daß das materielle Modell auf einfache und rationelle Weise unter Verwendung des vorhandenen Computermodells hergestellt werden kann.

In bestimmten Fällen hat sich in der Praxis herausgestellt, daß die computergesteuerten Werkzeuge zu wenig flexibel handhabbar sind. Dies gilt insbesondere für die Herstellung von Modellen im künstlerischen Bereich oder beispielsweise topographischen Reliefen. Hier ist es außerordentlich schwierig, Computerprogramme für das gesamte Relief zu erstellen, welche das Werkzeug automatisch in jede gewünschte Lage versetzen, ohne beispielsweise bereits hergestellte Reliefausformungen zu zerstören. Weiterhin lassen sie keine Gestaltungsmodifikation zu, welche beispielsweise auf den künstlerischen Blick des Modellschöpfers erst während der Arbeit erfolgen sollen. Aufgabe der vorliegenden Erfindung ist es demnach auch, unter Verwendung eines vorgezeichneten Computermodells ein Modell herstellen zu können, welches gegebenenfalls Abweichungen von dem Computermodell aufzeigt.

Zur Lösung dieser Aufgabe führt ein Verfahren der eingangs erwähnten Art, bei dem das gespeicherte Modell für die Oberfläche des Werkstückes nur einen Rahmen für die Bewegung des Werkzeugs darstellt, innerhalb dessen das Werkzeug frei bewegt ist.

Dadurch wird erreicht, daß zwar der erlaubte Bewegungsraum des Werkzeugs entsprechend der vorgeschriebenen Solldimensionen des Modells oder des Werkstücks begrenzt wird, der Bewegungsweg des Werkzeugs innerhalb des Bewegungsraums jedoch nicht vorgeschrieben wird. Weiter werden sowohl die Konstruktion der computerunterstützten Vorrichtung selbst im Vergleich zu numerisch gesteuerten Maschinen vereinfacht als auch der Zeitaufwand für den Entwurf und die Herstellung von exakten, komplizierten, freien Formen wesentlich verringert und gleichzeitig die Entwurfsqualität gesteigert, da Varianten des Entwurfsgegenstandes, d. h. Gestaltmodifikationen, mit geringem Aufwand hergestellt und sofort überprüft werden können.

Bevorzugt soll die Bewegung des Werkzeugs durch die gewünschten und gespeicherten Dimensionsangaben beschränkt sein. Dadurch wird vermieden, daß der Bearbeiter, sei es manuell oder mit Hilfsmaschinen, versehentlich über den gewünschten Bewegungsrahmen hinausgleitet. Das Erreichen des Rahmens kann optisch oder akustisch angezeigt werden.

Auf diese Weise ist es möglich, beispielsweise künstlerische Modelle herzustellen, welche zwar immer einen bestimmten dreidimensionalen Rahmen einhalten, jedoch innerhalb dieses Rahmens unterschiedlich ausgestaltet sind. Auch ist es möglich, bestimmte Modellteile, welche sehr vorsichtig herausgearbeitet werden müssen, von dem Bearbeiter erstellen zu lassen.

Zur Durchführung des Verfahrens ist erfindungsgemäß eine Vorrichtung vorgesehen, bei welcher über einen aus Getriebegliedern gebildeten Ständer das mit mindestens zwei Freiheitsgraden bewegliche, das Werkstück bearbeitende oder abtastende Werkzeug auf einer Fläche abgestützt ist, wobei den Getriebegliedern Lagegeber für die Lagebestimmung des Werkzeugs zugeordnet sind, deren Signale zum Vergleich der Ist-Lage des Werkzeugs mit den Soll-Dimensionen der Oberfläche des Werkstücks dienen.

In der Zeichnung ist ein Ausführungsbeispiel einer Vorrichtung zur Durchführung des erfindungsgemäßen Verfahrens dargestellt. Es zeigt

Fig. 1 ein Blockschema einer Vorrichtung für das Formen der Oberfläche eines Werkstücks,

Fig. 2 eine schematische Darstellung einer Vorrichtung zum Formen der Oberfläche einen auf einer Fläche abgestützten Werkstücks und

Fig. 3 eine Vorrichtung ähnlich derjenigen nach Fig. 2, wobei das Werkstück über einen beweglichen Halter auf der Fläche abgestützt ist.

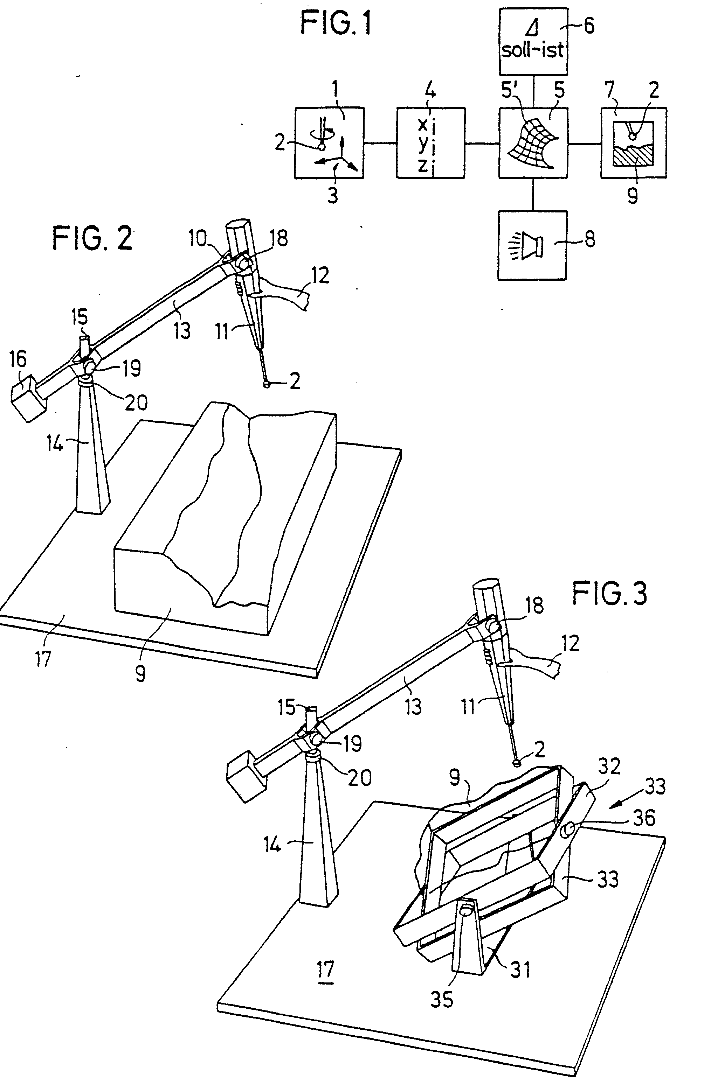

Die Erfindung geht von der Überlegung aus, daß zum freien Formen der Oberfläche eines aus Materie hergestellten Modells, z. B. eines Werkstücks mittels eines Werkzeugs, z. B. eines Fräskopfes, als Vorlage ein abstraktes, im Speicher eines Computers festgehaltenes Modell verwendet wird. In Fig. 1 ist eine Vorrichtung als Blockschema dargestellt, mit dem die Herstellung von Werkstücken mittels eines abstrakten, im Computer gespeicherten Modells möglich ist.

Der Block stellt ein schematisch dargestelltes rotierendes Werkzeug 2 dar, das anhand von Fig. 2 und 3 näher beschrieben wird. Das Werkzeug 2 kann in einem Bewegungsraum bewegt werden, der durch ein Koordinatenkreuz 3 versinnbildlicht ist. Der an dem Block 1 anschließende Block 4 ist ein Prozessor, der fortlaufend die Lage des Fräskopfes 2, z. B. aus den Signalen von Lagegebern, errechnet, was durch drei Koordinaten $X_i$, $Y_i$, $Z_i$, versinnbildlicht ist. Der Block 5 stellt einen Computer dar, in dem das abstrakte Modell des herzustellenden Werkstücks gespeichert ist, das durch eine Fläche 5' versinnbildlicht ist. Der Block 6 stellt einen weiteren Prozessor dar, welcher die Differenz zwischen den Ist-Werten der Lage des Fräskopfes 2 und den Soll-Dimensionen des herzustellenden Werkstücks ermittelt.

Die Darstellung dieser Lagedifferenz kann in verschiedener Weise erfolgen, wie die Blöcke 7, 8 zeigen. Der Block 7 stellt beispielsweise einen Bildschirm des Computers 5 dar, in dem der Fräskopf 2 und ein örtlicher Schnitt durch die Soll-Dimension des herzustellenden Werkstücks 9 abgebildet werden. Es kann somit fortlaufend kontrolliert werden, ob die Soll-Dimensionen des Werkstücks 9 eingehalten werden. Bei Erreichen einer Soll-Dimension können noch zusätzliche akustische oder optische Signale, z. B. Warnlampen, verwendet werden.

Der Block 8 stellt eine akustische Überwachung der Herstellung des Werkstücks 9 dar. Es werden beispielsweise akustische Signale erzeugt, die bei der Annäherung an die Soll-Dimension des Werkstücks 9 sich ändern, z. B. durch Ändern der Tonhöhe oder der Signallänge. Auch die Kombination verschiedener Signale, z. B. optischer und akustischer Signale, ist möglich.

In Fig. 2 ist die durch den Block 1 schematisch dargestellte Vorrichtung mit ihren Einzelteilen dargestellt. Der Fräskopf 2 wird durch einen Motor (nicht sichtbar) angetrieben, der in einem in einer Gabel 10 pendelnd gelagerten Getriebeglied 11 eingebaut ist. Die Bedienungsperson kann mit der Hand 12 den Fräskopf 2 frei bewegen. Die Gabel 10 ist ein Teil eines Getriebegliedes 13, das in einem Getriebeglied 15 schwenkbar gelagert ist und an seinem Ende ein Gewicht 16 aufweist, mit dem das Gewicht des Motors ausgeglichen wird. Das Getriebeglied 15 ist auf einem Sockel 14 drehbar gelagert, der auf einer Fläche 17 abgestützt ist, auf welcher auch das herzustellende Werkstück 9 gelagert ist. Durch die Getriebeglieder 11, 13,15 kann der Fräskopf 2 frei im Raum bewegt werden. Jeder räumlichen Lage $X_i$, $Y_i$, $Z_i$ des Fräskopfes entsprechen drei eindeutige Werte $A_i$, $B_i$, $C_i$ der drei den Freiheitsgraden entsprechenden Variablen. In Fig. 2 sind diese Variablen entsprechend der Anordnung der Getriebeglieder 11, 13, 15 Winkel, deren jeweilige Größe durch die drei Getriebegliedern zugeordneten Meßgeber 18, 19, 20 festgestellt wird. Je nach der Bauweise des durch die Getriebeglieder 11, 13, 15 gebildeten Ständers können die Variablen auch Strecken oder eine Mischung von Längen und Winkeln sein. Während des Fräsvorgangs werden die Werte der Variablen durch den Prozessor 4 über die Geber 18, 19, 20 abgefragt und die Ist-Lage des Fräskopfes 2 errechnet.

$$X_i = f_1 (A_i, B_i, C_i)$$

$$Y_i = f_2 (A_i, B_i, C_i)$$

$$Z_i = f_3 (A_i, B_i, C_i)$$

Die Funktionen $f_1$, $f_2$, $f_3$ sind im Prozessor 4 entweder als Softwarenprogramme, als Mikroprogramme oder als feste Hardware-Elektronik vorhanden.

Das herzustellende Werkstück 9 bleibt während der Bearbeitung auf der Fläche 17 aufgespannt; es kann aus beliebigem Material, z. B. Metall oder Kunststoff, hergestellt sein. Es wird eine leichte Bearbeitbarkeit durch Wahl gut formbarer Materialien, z. B. Kunststoffe, Gips, Ton od. dgl., angestrebt, die jedoch dem Verwendungszweck des Modells genügen.

Im Computer 5 ist das mathematische Modell des herzustellenden Werkstücks gespeichert und kann dort ohne Mühe frei manipuliert, d. h. im Raum positioniert, vergrößert, verkleinert, verzerrt oder sonstwie abgeändert werden. Außerdem könnte der Computer 5 zusätzliche Informationen über den Zerspanungsvorgang errechnen, z. B. die Geschwindigkeit des Eindringens des Fräskopfes 2 oder die Parallelität des Fräsweges mit der Soll-Fläche. Auch die Aufgaben der Prozessoren 4, 6 können selbstverständlich vom Computer 5 übernommen werden.

In Fig. 3 ist dieselbe Vorrichtung für das Formen der Oberfläche eines Werkstücks wie in Fig. 2 dargestellt. Der Unterschied besteht darin, daß das Werkstück 9 nicht fest auf der Fläche 17 aufgespannt ist, sondern in einer beweglichen Vorrichtung 30 gelagert ist. Die Vorrichtung 30 besteht aus einem Haltebügel 31, in welchem ein erster Rahmen 32 drehbar gelagert ist. Im Rahmen 32 ist ein zweiter Rahmen 33 drehbar gelagert und trägt das Werkstück 9. Die jeweilige Lage wird durch Lagegeber 35, 36 festgestellt und an den Computer 5 gemeldet, um dort eine entsprechende Drehung des abstrakten Computermodells zu bewirken, damit die Soll-Dimensionen der jeweiligen Lage des Werkstücks 9 entsprechen. Damit wird eine allseitige Bearbeitung der Modelle ohne wiederholtes Aufspannen des Werkstück möglich. Diese kontrollierten Drehbewegungen könnten auch durch Verschiebungsbewegungen ergänzt oder ersetzt werden.

Die in kurzen Zeitabständen fortlaufend anfallende Information über den Bearbeitungsvorgang des Fräskopfes 2 wird in Signale transformiert, welche die manuelle Führung des Fräskopfes in möglichst anschaulicher Form ermöglichen sollen, wie dies im Zusammenhang mit Fig. 1 erläutert ist. Das beschriebene Verfahren und die dazugehörige Vorrichtung stellen ein leistungsfähiges Werkzeug im Entwurfs- und Herstellungsprozeß von dreidimensionalen, freien Formen dar. Voraussetzung ist hierbei die Software. Wesentlich ist hierbei die Steigerung der Entwurfsqualität, da Varianten des Entwurfsgegenstandes mit geringem Aufwand durchgespielt werden können. Gestaltmodifikationen werden mühelos vorgenommen; in irgendeiner Entwurfsphase kann das materielle Modell des im Computer enthaltenen abstrakten Modells hergestellt werden.

Es ist auch möglich, daß umgekehrt die Vorrichtung als räumliches Digitalisierungsgerät zur Ausmessung und Übermittlung in den Computer eingesetzt wird, wobei der Fräskopf 2 durch einen Taststift ersetzt werden kann.

Es ist auch möglich, zur Begrenzung des Bewegungsraums des Fräskopfes 2 die Soll-Fläche heranzuziehen, wobei computergesteuerte Vorrichtungen zur Sperrung der Getriebegelenke vorgesehen werden können. Eine weitere Sicherungsmaßnahme stellt das automatische Abstellen des Motors oder das Entkuppeln der Antriebswelle des Werkzeugs 2 beim Durchdringen der Soll-Fläche dar.

**Patentansprüche**

1. Verfahren für das Formen der Oberfläche eines Werkstückes durch spanende Bearbeitung oder plastische Umformung des Werkstückes durch ein computerunterstütztes Werkzeug, wobei die zu formende Oberfläche als ein dreidimensionales Modell in dem Computer gespeichert wird und eine Ist-Lage des Werkzeuges und/oder das Erreichen einer Soll-Lage während dem Bearbeiten oder Formen ständig bestimmt und mit der Oberfläche des gespeicherten Modells verglichen wird, dadurch gekennzeichnet, daß das gespeicherte Modell für die Oberfläche des Werkstückes nur einen Rahmen für die Bewegung des Werkzeuges darstellt, innerhalb dessen das Werkzeug frei bewegt wird.

2. Verfahren nach Anspruch 1, dadurch gekennzeichnet, daß die Handhabung des Werkzeuges manuell erfolgt.

3. Verfahren nach Anspruch 1 oder 2, dadurch gekennzeichnet, daß die Ist- und/oder Soll-Lage des Werkzeugs optisch, z. B. mittels eines Computerschirms und/oder das Erreichen des Bewegungsrahmens akkustisch signalisiert wird.

4. Vorrichtung zur Durchführung des Verfahrens nach Anspruch 1 für das Formen der Oberfläche eines Werkstücks durch spanende Bearbeitung oder plastische Umformung des Werkstückes durch ein computerunterstütztes Werkzeug, wobei die zu formende Oberfläche als ein dreidimensionales Modell in dem Computer gespeichert ist, dadurch gekennzeichnet, daß über einen aus Getriebegliedern (11, 13, 15) gebildeten Ständer das mit mindestens zwei Freiheitsgraden bewegliche, das Werkstück (9) bearbeitende oder abtastende Werkzeug (2) auf einer Fläche (17) abgestützt ist, wobei den Getriebegliedern Lagegeber (18, 19, 20) für die Lagebestimmung des Werkzeuges zugeordnet sind, deren Signale zum Vergleich der Ist-Lage des Werkstücks mit den Soll-Dimensionen der Oberfläche des Werkstücks dienen.

5. Vorrichtung nach Anspruch 4, dadurch gekennzeichnet, daß das zu bearbeitende Werkstück (9) gegenüber der Unterlage (17) in einem Halter gelagert ist, der zur allseitigen Bearbeitbarkeit des Werkstücks um mindestens eine Achse drehbar ist, wobei Geber (35, 36) zur Feststellung der jeweiligen Lage des Werkstücks angeordnet sind, die eine entsprechende Drehung des Computermodells erwirken.

**Claims**

1. Method for shaping the surface of a workpiece by machining or by plastic transformation of the workpiece by means of a computer-aided tool, whereby the surface to be transformed is stored in the computer as a tridimensional model continuously indicating the actual position of the tool and/or the arrival in the ideal position during the machining or shaping and comparison with the surface of the stored model, characterized in that the stored model for the surface of the workpiece defines a frame only for the movement of the tool, within which the tool is freely movable.

2. Method according to claim 1, characterized in that the tool is handled manually.

3. Method according to claim 1 or 2, characterized in that the actual and/or ideal position of the tool is optically signalled, e. g. by means of a computer screen, and/or that the arrival at the frame for the movement is signalled acoustically.

4. Device for performing the method defined in claim 1 for shaping the surface of a workpiece by machining or plastic transformation of the workpiece by means of a computer-aided tool, whereby the surface to be shaped is stored in the computer as a tridimensional model, characterized in that the tool (2) for machining or scanning the workpiece is moveable with at least two degrees of freedom and is supported on a surface (17) via a frame consisting of gears (11, 13, 15), which are assigned to indicators (18, 19, 20) for the positioning of the tool, the signals of which serve to compare the actual position of the workpiece with the ideal position of the surface of the workpiece.

5. Device according to claim 4, characterized in that the workpiece (9) to be machined is supported in a holder against the base (17), which holder is being rotatable on at least one axis for the treatment of all sides of the workpiece, and that means (35, 36) for indicating the momentary position of the workpiece are provided, causing a corresponding rotation of the computer model.

**Revendications**

1. Procédé pour façonner la surface d'une pièce par usinage avec enlèvement de matière ou par modification plastique de la pièce par un outil dirigé par un ordinateur, la surface à façonner étant enregistrée en mémoire dans l'ordinateur sous la forme d'un modèle tridimensionnel et la position effective de l'outil et/ou son arrivée dans une position de consigne pendant l'usinage ou le formage étant constamment détectées et comparées à la surface du modèle enregistrée en mémoire, caractérisé en ce que le modèle de surface de la pièce enregistrée en mémoire ne réprésente qu'un cadre pour le déplacement de l'outil, à l'intérieur duquel l'outil peut être déplacé librement.

2. Procédé selon la revendication 1, caractérisé en ce que la manipulation de l'outil s'effectue à la main.

3. Procédé selon l'une des revendications 1 ou 2, caractérisé en ce que la position effective et/ou la position de consigne de l'outil sont signalées optiquement, par exemple au moyen d'un écran d'affichage et/ou en ce que l'arrivée jusqu'au cadre délimitant les déplacements est signalée acoustiquement.

4. Dispositif pour l'application du procédé selon la revendication 1 pour façonner la surface d'une pièce par usinage avec enlèvement de matière ou par modification plastique de la pièce par un outil dirigé par un ordinateur, la surface à façonner étant enregistrée dans l'ordinateur sous la forme d'un modèle tridimensionnel, caractérisé en ce que l'outil (2) mobile avec au moins deux degrés de liberté qui usine ou explore la pièce (9) prend appui sur une surface (17) par l'intermédiaire d'un support formé d'éléments à engrenages (11, 13, 15), ces éléments à engrenage comportant chacun des organes indicateurs de position (18, 19, 20) qui déterminent la position de l'outil et qui émettent des signaux permettant de comparer la position effective de la pièce avec les dimensions de consigne de la surface de la pièce.

5. Dispositif selon la revendication 4, caractérisé en ce que la pièce à façonner (9) est placée, au-dessus de la surface (17), dans un dispositif de maintien qui peut tourner au moins autour d'un axe pour permettre l'usinage de la pièce dans tous les sens, des organes indicateurs (35, 36) permettant de déterminer à chaque instant la position de la pièce et provoquant une rotation correspondante du modèle de l'ordinateur.

FIG.1

6
△
soll-ist

1    4    5'   5    7    2

2

3

x
y
z

9

8

FIG. 2

10   18
12

15
16
19
13
11
20
14
2

17   9

FIG.3

18

12

15
19
13
11
20
2

14

9    32   33
36
33

17
31
35

7